(19) Europäisches Patentamt / European Patent Office / Office européen des brevets

(11) **EP 3 862 916 A1**

(12) **EUROPEAN PATENT APPLICATION**

(43) Date of publication:
**11.08.2021 Bulletin 2021/32**

(51) Int Cl.:
***G06K 9/00*** *(2006.01)*

(21) Application number: **20155564.6**

(22) Date of filing: **05.02.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Zenuity AB**
**417 56 Göteborg (SE)**

(72) Inventors:
• **GUSTAFSSON, Tony**
  **436 39 Askim (SE)**
• **SCHINDLER, Andreas**
  **417 24 Göteborg (SE)**
• **SÖRSTEDT, Joakim**
  **417 28 Göteborg (SE)**

(74) Representative: **Valea AB**
**Box 1098**
**405 23 Göteborg (SE)**

(54) **CONFIDENCE-DETERMINED ROAD MODEL FOR A VEHICLE**

(57)    The present disclosure relates to a method performed by a vehicle road model system (1) for providing a confidence-determined road model (5) for a vehicle (2). The vehicle road model system determines (1001) based on derived localization data, a position and orientation, pose (20), of the vehicle in view of a digital map (3), wherein the vehicle pose is associated with an uncertainty pertinent the localization data and/or the digital map. The vehicle road model system further transforms (1002) - based on the vehicle pose - at least a portion of the digital map into an ego-vehicle coordinate system (4). Moreover, the vehicle road model system determines (1003) based on the vehicle pose and the digital map, a road model (5) in the ego-vehicle coordinate system, which road model (5) comprises one or more static elements (6) positioned in vicinity and ahead of the vehicle pose. Furthermore, the vehicle road model system determines (1004) - based on the uncertainty and the one or more static elements - a respective confidence area (7) surrounding the one or more static elements, wherein respective confidence area represents a region which with a predeterminable confidence level encompasses a real-world position of respective one or more static elements.

The disclosure also relates to a vehicle road model system in accordance with the foregoing, a vehicle comprising such a vehicle road model system, and a respective corresponding computer program product and non-volatile computer readable storage medium.

Fig. 2

**Description**

TECHNICAL FIELD

The present disclosure relates to providing a confidence-determined road model for a vehicle, such as a vehicle supporting an advanced driver-assistance system, ADAS, and/or automated driving system, ADS.

BACKGROUND

An increasing number of modern vehicles have advanced driver-assistance systems, ADAS, to increase vehicle safety and more generally road safety. ADAS - which for instance may be represented by adaptive cruise control, ACC, collision avoidance system, forward collision warning, etc. - are electronic systems that may aid a vehicle driver while driving. To function as intended, ADAS may rely on inputs from multiple data sources, such as e.g. automotive imaging, LIDAR, radar, image processing, computer vision, and/or in-car networking.

Moreover, in a not too distant future, autonomous or automated driving systems, ADSs, will to greater extent find their way into modern vehicles. An ADS is a complex combination of various components that can be defined as systems where perception, decision making, and operation of the vehicle are performed by electronics and machinery instead of a human driver, and as introduction of automation into road traffic. This includes handling of the vehicle, destination, as well as awareness of surroundings. While the automated system has control over the vehicle, it allows the human operator to leave all responsibilities to the system. An ADS commonly combines a variety of sensors to perceive the vehicle's surroundings, such as e.g. radar, LIDAR, sonar, camera, navigation and/or positioning system e.g. GNSS such as GPS, odometer and/or inertial measurement units, upon which advanced control systems may interpret sensory information to identify appropriate navigation paths, as well as obstacles and/or relevant signage.

One of the most challenging tasks for an ADAS- or ADS-supporting vehicle is to estimate a model of the road in front of the vehicle, and in particular to understand how reliable that road model is. Commonly, the vehicle's position and orientation - i.e. pose - is continuously estimated, for instance by means of a localization module with support from a digital map such as a high definition, HD, map. The vehicle pose combined with the digital map may then be used to produce a continuously updated road model - comprising geometrical models of e.g. lane markings, traffic signs, barriers, traffic lights and similar in vicinity of the vehicle - which road model then may form basis for path-planning of the vehicle. Due to for instance noise and/or tolerances associated with surrounding detecting and/or position detecting sensors of the vehicle, and/or due to for instance uncertainties associated with the digital map, an estimated vehicle pose may, however, be slightly uncertain it terms of accuracy. Such vehicle pose uncertainties may accordingly lead to slight road model uncertainties, which in turn may affect vehicle path-planning.

SUMMARY OF THE INVENTION

It is therefore an object of embodiments herein to provide an approach for in an improved and/or alternative manner determine road model uncertainties, such as with improved precision.

The object above may be achieved by the subject-matter disclosed herein. Embodiments are set forth in the appended claims, in the following description and in the drawings.

The disclosed subject-matter relates to a method performed by a vehicle road model system for providing a confidence-determined road model for a vehicle. The vehicle road model system determines, based on derived localization data, a pose of the vehicle in view of a digital map, wherein the vehicle pose is associated with an uncertainty pertinent the localization data and/or the digital map. The vehicle road model system further transforms, based on the vehicle pose, at least a portion of the digital map into an ego-vehicle coordinate system. Moreover, the vehicle road model system determines, based on the vehicle pose and the digital map, a road model in the ego-vehicle coordinate system, which road model comprises one or more static elements positioned in vicinity and ahead of the vehicle pose. The vehicle road model further determines, based on the uncertainty and the one or more static elements, a respective confidence area surrounding the one or more static elements, wherein the respective confidence area represents a region which with a predeterminable confidence level encompasses a real-world position of respective one or more static elements.

The disclosed subject-matter further relates to a vehicle road model system for - and/or adapted for - providing a confidence-determined road model for a vehicle. The vehicle road model system comprises a pose determining unit for determining based on derived localization data, a pose of the vehicle in view of a digital map, wherein the vehicle pose is associated with an uncertainty pertinent the localization data and/or the digital map. The vehicle road model further comprises a transforming unit for transforming - based on the vehicle pose - at least a portion of the digital map into an ego-vehicle coordinate system. Moreover, the vehicle road model system comprises a road model determining unit for determining - based on the vehicle pose and the digital map - a road model in the ego-vehicle coordinate system, which road model comprises one or more static elements positioned in vicinity and ahead of the vehicle pose. The vehicle road model system furthermore comprises a confidence area determining unit for determining - based on the uncertainty and the one or more static elements - a respective confidence area surrounding the one or more static elements, wherein respective confidence area represents a region which with a predeterminable confidence level encompasses a real-world position of respective one or more static elements.

Furthermore, the disclosed subject-matter relates to a vehicle comprising an ADAS or ADS, and further comprising a vehicle road model system as described herein.

Moreover, the disclosed subject-matter relates to a computer program product comprising a computer program containing computer program code means arranged to cause a computer or a processor to execute the steps of a the vehicle road model system described herein, stored on a computer-readable medium or a carrier wave.

The disclosed subject-matter further relates to a non-volatile computer readable storage medium having stored thereon said computer program product.

Thereby, there is introduced an approach according to which vehicle pose uncertainties may be propagated into relevant and/or appropriate road model uncertainties. That is, since there is determined - based on derived localization data - a pose of the vehicle in view of a digital map, which vehicle pose is associated with an uncertainty pertinent the localization data and/or the digital map, there is estimated in relation to said digital map, a position and orientation of the vehicle, deemed to be associated with an expected - e.g. inherent - sensor-related and/or map-related accuracy uncertainty. Moreover, that is, since - based on the vehicle pose - at least a portion of the digital map is transformed into an ego-vehicle coordinate system, relevant and/or selected sections or segments of the digital map - and geometries comprised therein - are translated and/or rotated, e.g. from a global coordinate system, to an ego-vehicle coordinate system, such that a world view as perceived from the vehicle subsequently may be supported. Furthermore, that is, since there is determined - based on the vehicle pose and the digital map - a road model in the ego-vehicle coordinate system, which road model comprises one or more static elements positioned in vicinity and ahead of the vehicle pose, there is established a road geometry estimation as perceived from and/or by the vehicle which subsequently may be used for vehicle path-planning, comprising at least one or more non-dynamic elements e.g. lane markings in front of the vehicle. Moreover, that is, since there is determined - based on the uncertainty and the one or more static elements - a respective confidence area surrounding the one or more static elements, wherein respective confidence area represents a region which with a predeterminable confidence level encompasses a real-world position of respective one or more static elements, respective confidence areas for said elements may be determined, revealing - with a known probability - containment therein of true positions of said elements. Accordingly, with the introduced concept, uncertainties related to the determined and/or estimated vehicle pose may be propagated into appropriate and/or relevant uncertainties of the road model, in that the road model uncertainties at least in part are indicated and/or represented by the confidence-indicating confidence areas surrounding respective static element. Thus, by determining respective confidence areas of the one or more static elements as suggested herein, uncertainties of the road model may to great and/or greater extent be confident, in that a reliability of a static element estimate may be deemed more reliable when attached with such a confidence area.

For that reason, an approach is provided for in an improved and/or alternative manner propagate vehicle pose uncertainties into relevant and/or appropriate road model uncertainties.

The technical features and corresponding advantages of the above mentioned method will be discussed in further detail in the following.

BRIEF DESCRIPTION OF THE DRAWINGS

The various aspects of the non-limiting embodiments, including particular features and advantages, will be readily understood from the following detailed description and the accompanying drawings, in which:

Fig. 1 illustrates a schematic view of an exemplifying vehicle road model system according to embodiments of the disclosure;

Fig. 2 illustrates a schematic view of an exemplifying road model according to embodiments of the disclosure;

Figs. 3a-b illustrate a schematic view of an exemplifying concatenated confidence area according to embodiments of the disclosure;

Figs. 4a-c illustrate schematic views of exemplifying confidence areas according to embodiments of the disclosure;

Fig. 5 illustrates a schematic view of exemplifying displacement of the vehicle pose according to embodiments of the disclosure;

**Fig. 6** is a schematic block diagram illustrating an exemplifying vehicle road model system according to embodiments of the disclosure; and

**Fig. 7** is a flowchart depicting an exemplifying method performed by a vehicle road model system according to embodiments of the disclosure.

DETAILED DESCRIPTION

Non-limiting embodiments of the present disclosure will now be described more fully hereinafter with reference to the accompanying drawings, in which currently preferred embodiments of the disclosure are shown. This disclosure may, however, be embodied in many different forms and should not be construed as limited to the embodiments set forth herein. Like reference characters refer to like elements throughout. Dashed lines of some boxes in the figures indicate that these units or actions are optional and not mandatory.

In the following, according to embodiments herein which relate to providing a confidence-determined road model for a vehicle, there will be disclosed an approach according to which vehicle pose uncertainties may be propagated into relevant and/or appropriate road model uncertainties.

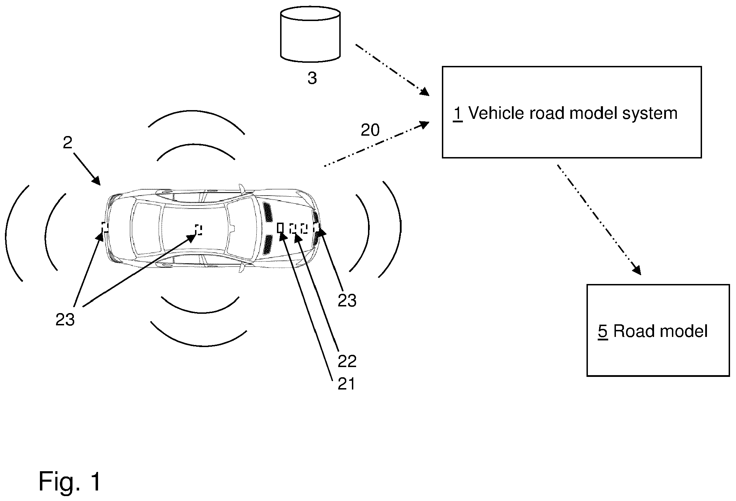

Referring now to the figures and **Fig. 1** in particular, there is depicted a schematic view of an exemplifying **vehicle road model system 1** according to embodiments of the disclosure. The vehicle road model system 1 is for providing a confidence-determined road model for a **vehicle 2,** which vehicle 2 may comprise an **ADAS and/or ADS 21.** The exemplifying ADAS or ADS 21 may refer to any arbitrary one or more ADAS or ADS e.g. known in the art and/or yet to be developed. The exemplifying vehicle 2 - which may comprise the vehicle road model system 1 - may refer to any arbitrary manned or unmanned vehicle, for instance an engine-propelled or electrically-powered vehicle such as a car, truck, lorry, van, bus, motorcycle and/or tractor. Moreover, the term "vehicle" may refer to "road-traffic vehicle", and further to "autonomous and/or at least partly autonomous vehicle", "driverless and/or at least partly driverless vehicle", "automated and/or at least partly automated vehicle" and/or "self-driving and/or at least partly self-driving vehicle". The phrase "vehicle road model system" may refer to "confidence area determining system", "confidence determining system", "uncertainties determining system" and/or "pose uncertainty propagation system", and further to "road model comprised in, on-board and/or of a vehicle". "For" providing a confidence-determined road model, on the other hand, may refer to "adapted for" providing a confidence-determined road model, whereas the phrase "for providing a confidence-determined road model" may refer to "for providing a confidence-indicating road model" , "for handling road model uncertainties", "for providing at least a portion of a confidence-determined road model" and/or "for propagating a vehicle pose uncertainty into a road model uncertainty". Moreover, the phrase "road model for a vehicle" may refer to "road model in front of and/or in vicinity of a vehicle" and/or "road model of a road in front of and/or in vicinity of a vehicle", whereas "road model" may refer to "estimated road model", "map-based road model", "geometrical road model" and/or "road geometry".

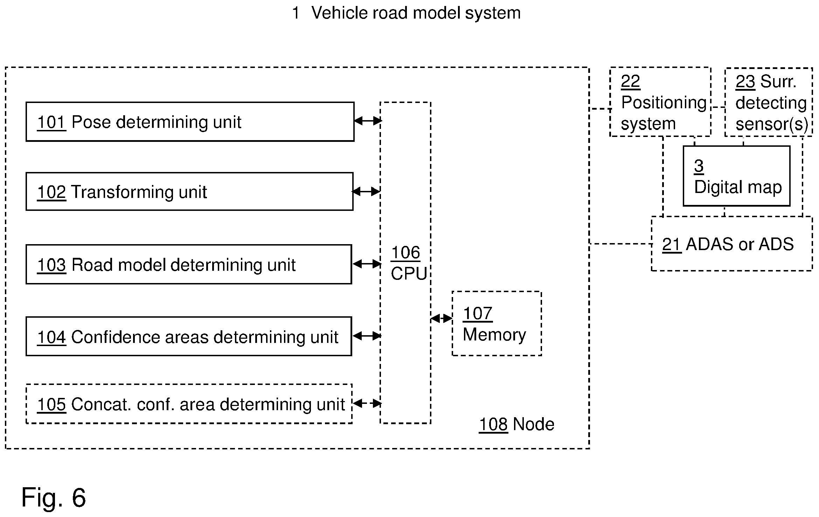

The vehicle road model system 1 is - e.g. by means of a **pose determining unit 101** (shown in Fig. 6) - adapted and/or configured for determining, based on derived localization data, a **pose 20** of the vehicle 2 in view of a **digital map 3,** which vehicle pose 20 is associated with an uncertainty pertinent the localization data and/or the digital map 3. Thereby, there is estimated in relation to a digital map 3, a position and orientation 20 of the vehicle 2, deemed to be associated with an expected - e.g. inherent -sensor-related and/or map-related accuracy uncertainty.

Determining the vehicle pose 20 in view of a digital map 3 may be accomplished in any arbitrary feasible - e.g. known - manner, such as with support from an optional **positioning system 22** and/or one or more **surrounding detecting sensors 23** comprised in and/or provided on-board the vehicle 2, in view of any arbitrary feasible - e.g. known - digital map such as a commonly known high definition, HD, map, or an equivalent or successor thereof. Said surrounding detecting sensors 23 and positioning system 22 may be represented by any arbitrary - e.g. known - sensors and/or functionality adapted to sense and/or perceive the vehicle's 2 surroundings and/or whereabouts, and may e.g. refer to one or a combination of one or more of radar, LIDAR, sonar, camera, navigation or positioning system e.g. GNSS such as GPS, odometer and/or inertial measurement units. The uncertainty associated with the determined and/or estimated vehicle pose 20, on the other hand, may refer to any arbitrary uncertainty and/or uncertainties feasible and/or relevant for the implementation at hand, assumed to result from accuracy uncertainties related to the localization data - i.e. uncertainties such as tolerances related to e.g. the one or more surrounding detecting sensors 23 and/or positioning system 22 - and/or accuracy uncertainties - e.g. absolute and/or relative - related to the digital map 3. The uncertainty - or uncertainties - may be deemed dynamic and vary over time as a result of e.g. how well the surrounding detecting sensors 23 and/or positioning system 22 sense and/or perceived the vehicle's 2 surroundings and/or whereabouts, and/or correlate with the digital map 3. Optionally, and as will be discussed further on, the uncertainty may be estimated based on a Guassian assumption and its covariance matrix, whereby said uncertainty may be quantified in a feasible manner. The expression "uncertainty is estimated based on" a Guassian assumption and its covariance matrix may refer to "uncertainty is represented by and/or comprising" a Guassian assumption and its covariance matrix. "Gaussian assumption", on the other hand, may refer to "Gaussian estimation".

"Determining" a pose may refer to "estimating", "deriving", "retrieving" and/or "obtaining" a pose, whereas the phrase "determining based on derived localization data, a pose" may refer to "determining based on localization data derived with support from one or more surrounding detecting sensors and/or positioning systems, a pose", "determining based on input from one or more surrounding detecting sensors and/or positioning systems, a pose" and/or merely "determining a pose". "In view of a digital map", on the other hand, may refer to "in a coordinate system and/or coordinates of a digital map" and/or "in global coordinates and/or in a global coordinate system with support from a digital map", whereas "vehicle pose is associated with an uncertainty" may refer to "vehicle pose is deemed, assumed and/or expected to be associated with an uncertainty". Moreover, "an uncertainty" may refer to "an uncertainty or uncertainties", "an accuracy uncertainty", "an uncertainty indication and/or range", "a vehicle pose uncertainty" and/or "an estimated predeterminable uncertainty", whereas "uncertainty pertinent said localization data and/or said digital map" may refer to "uncertainty propagating from, resulting from and/or traceable from said localization data and/or said digital map". The phrase "derived localization data" may refer to "derived localization information and/or input", "derived positioning data" and/or merely "localization data", whereas "based on derived localization data" may refer to "taking into consideration derived localization data".

The vehicle road model system 1 is - e.g. by means of a **transforming unit 102** (shown in Fig. 6) - adapted and/or configured for transforming based on the vehicle pose 20, at least a portion of the digital map 3 into an **ego-vehicle coordinate system 4.** Thereby, relevant and/or selected sections or segments of the digital map 3 - and geometries comprised therein - may be translated and/or rotated, e.g. from a global coordinate system, to an ego-vehicle coordinate system 4. Accordingly, a world view as perceived from the vehicle 2 may be supported. Transforming the digital map 3 into the ego-vehicle coordinate system 4 may be accomplished in any arbitrary - e.g. known - manner deemed feasible for the implementation at hand, such as e.g. placing an origin of the ego-vehicle coordinate system 4 essentially at the middle of the vehicle's 2 rear axle. "Transforming" at least a portion of the digital map 3 may refer to "translating and/or rotating" at least a portion of the digital map 3, whereas the phrase "at least a portion of said digital map" may refer to "at least a portion of said digital map in vicinity of and/or essentially ahead of said vehicle pose". The phrase "an ego-vehicle coordinate system", on the other hand, may refer to "an ego-vehicle coordinate system having its origin located essentially at the middle of said vehicle's rear axle", and further to "ego-vehicle coordinates" and/or "ego-vehicle frame".

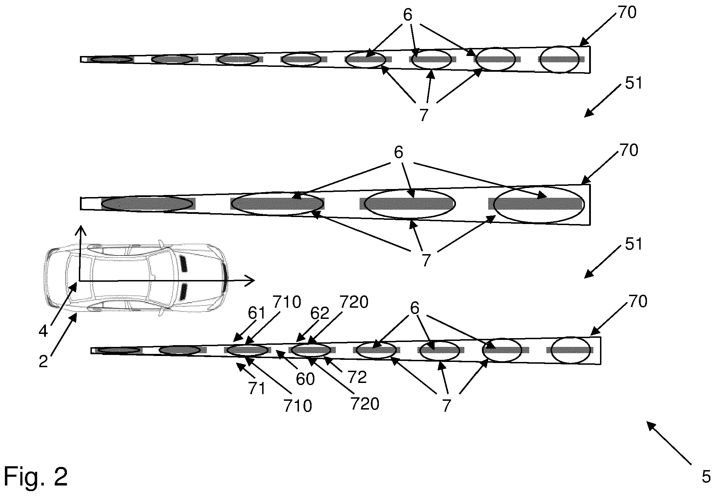

Further depicted in Fig. 1 is a road model 5, which will be described in further detail in conjunction with Fig. 2 below.

As further shown in **Fig. 2,** which illustrates a schematic view of an exemplifying road model according to embodiments of the disclosure, the vehicle road model system 1 is - e.g. by means of a **road model determining unit 103** (shown in Fig. 6) - adapted and/or configured for determining based on the vehicle pose 20 and the digital map 3, a **road model 5** in the ego-vehicle coordinate system 4, which road model 5 comprises one or more **static elements 6** positioned in vicinity and ahead of the vehicle pose 20. Thereby, there is established a road geometry estimation 5 as perceived from and/or by the vehicle 2 which subsequently may be used for vehicle path-planning, comprising at least one or more non-dynamic elements 6, such as e.g. lane markings, barriers, traffic lights, traffic signs etc., in front of the vehicle 2.

Determining the road model 5 may be accomplished in any arbitrary - e.g. known - manner deemed feasible for the implementation at hand, such as with support and/or input from the digital map 3, the positioning system 22 and/or the surrounding detecting sensors 23. Determining the road model 5 may furthermore according to an example, additionally be accomplished with support and/or input from a - e.g. known - perception system (not shown) comprised in - and/or provided on-board - the vehicle 2 and/or the ADAS or ADS 21, adapted to estimate surroundings of the vehicle 2, and subsequently adapted to estimate world views of the vehicle surroundings. Such an optional perception system may refer to any commonly known system and/or functionality, e.g. comprised in one or more electronic control modules and/or nodes of the vehicle 2 and/or the ADAS or ADS 21, adapted and/or configured to interpret sensory information - relevant for driving of the vehicle 2 - to identify e.g. obstacles, vehicle lanes, relevant signage, landmarks, other road users, appropriate navigation paths etc. The exemplifying perception system-which may be adapted to support e.g. sensor fusion, tracking, localization etc. - may thus be adapted to rely on and obtain inputs from multiple data sources, such as automotive imaging, image processing, computer vision, and/or in-car networking, etc., in combination with sensory information, for instance derived from the one or more surrounding detecting sensors 23.

The one or more static elements 6 may refer to any arbitrary non-dynamic elements and/or objects - such as e.g. lane-marking geometries, traffic signs, barriers, traffic lights, etc. - positioned and/or located essentially in front of and/or relatively near the vehicle 2, derivable for instance from the digital map 3 and/or the surrounding detecting sensors 23. Optionally, however, and as exemplified in Fig. 2, the one or more static elements 6 may comprise consecutive static elements 6, e.g. lane markings, delimiting one or more **driving lanes 51.** In exemplifying Fig. 2, two driving lines 51 are depicted in an exemplifying manner, respectively delimited by respective outer lane markings 6 and common inner lane markings 6 forming a centreline. The phrase "consecutive static elements" may refer to "essentially consecutive static elements", "consecutive continuous and/or spread apart static elements" and/or "one or more lines of consecutive static elements", whereas "delimiting one or more driving lanes" may refer to "delimiting on one or both sides one or more driving lanes" and/or "delimiting one or more driving lines in front of said vehicle".

The phrase "determining a road model" may refer to "estimating and/or calculating a road model", whereas "road model" - as previously indicated - may refer to "estimated road model", "map-based road model", "geometrical road model" and/or "road geometry". "Static elements", on the other hand, may refer to "essentially static elements", "non-dynamic elements", "fixed elements" and/or "static elements such as e.g. lane-marking geometries", and further according to an example to "static elements e.g. derived from said digital map and/or one or more surrounding detecting sensors on-board said vehicle". Moreover, "in vicinity and ahead of said vehicle pose" may refer to "in vicinity and/or ahead of said vehicle pose" and further to "within a predeterminable distance from and ahead of said vehicle pose". The phrase "ahead of said vehicle pose", on the other hand, may refer to "essentially ahead of said vehicle pose" and/or "ahead of the position of said vehicle". According to an example, the phrase said road model "comprising" one or more static elements, may further refer to said road model "comprising direct representations - and/or indirect representations such as a virtual line - of" one or more static elements.

The vehicle road model system 1 is - e.g. by means of a **confidence area determining unit 104** (shown in Fig. 6) - adapted and/or configured for determining based on the uncertainty and the one or more static elements 6, a respective **confidence area 7** surrounding the one or more static elements 6, wherein respective confidence area 7 represents a region which with a predeterminable confidence level encompasses a real-world position of respective one or more static elements 6. Thereby, taking the uncertainty of the determined vehicle pose 20 into consideration in view of the one or more static elements 6, respective confidence areas 7 for said elements 6 may be determined ,revealing with a known probability - such as e.g. in the exemplifying range of 99%-99, 999% - containment therein 7 of true positions of said elements 6. Accordingly, with the introduced concept, uncertainties related to the determined and/or estimated vehicle pose 20 may be propagated into appropriate and/or relevant uncertainties of the road model 5, in that the road model uncertainties at least in part are indicated and/or represented by the confidence-indicating confidence areas 7 surrounding respective static element 6. Thus, by determining respective confidence areas 7 of the one or more static elements 6 as suggested herein, uncertainties of the road model 5 may to great and/or greater extent be confident, in that a reliability of a static element estimate 6 may be deemed more reliable when attached with a confidence area 7.

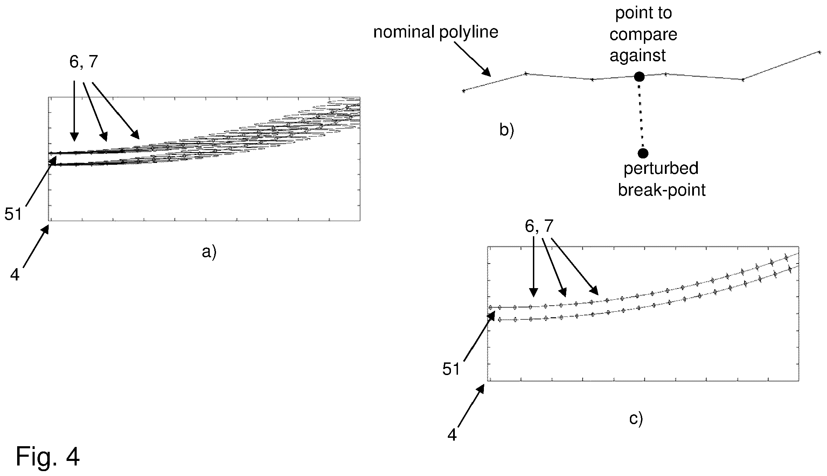

The respective confidence area 7 surrounding respective static element 6 may be determined in any feasible manner - provided that the road model uncertainty and the one or more static elements 6 are taken into consideration - enabling respective confidence area 7 to represent a region which with a predeterminable confidence level encompasses a true position of respective one or more static elements 6. As previously indicated, the uncertainty may for instance be estimated based on a - e.g. known - covariance matrix. Moreover, determining respective confidence area 7 may for instance be based on applying a function - such as e.g. an exemplifying confidence approximation function - taking into consideration and/or using as input the uncertainty and the one or more static elements 7. An exemplifying approach for how the uncertainty and static element(s) 6 may influence determination of the confidence area(s) 7 may be derived further on in conjunction with Fig. 4. Respective confidence area 7 may have any arbitrary feasible dimensions, for instance be elliptic, and further, as exemplified in Fig. 2, a static element confidence area size may increase with an increasing distance of the static element 6 from the vehicle pose 20. The predeterminable confidence level, on the other hand, may be of any arbitrary value deemed relevant for the implementation at hand - for instance taking into consideration safety requirements, characteristics and/or functionality of the ADAS or ADS, weather conditions, timing conditions, characteristics of the one or more static elements 6 etc. - and may for instance range from exemplifying 50% up to close to 100%. The confidence level may accordingly be variable, and further user-definable and/or automatically set e.g. based on current and/or surrounding conditions.

The phrase "determining based on said uncertainty and said one or more static elements" may refer to "calculating and/or estimating based on said uncertainty and said one or more static elements" and/or "determining based on said uncertainty and positions of said one or more static elements". "Confidence area surrounding", on the other hand, may refer to "confidence area e.g. an ellipse or essentially an ellipse surrounding". "Surrounding" may further refer to "encompassing", whereas "surrounding said one or more static elements" may refer to "surrounding respective static element". Moreover, according to an example, the phrase "determining based on said uncertainty and said one or more static elements" may refer to "determining based on applying a function such as e.g. a confidence approximation function taking into consideration and/or using as input said uncertainty and said one or more static elements". The phrase "confidence area represents a region" may refer to "confidence area reflects and/or corresponds to a region", whereas "predeterminable confidence level" may refer to "predetermined, definable, user-definable and/or condition(s)-definable confidence level" and/or "predeterminable probability and/or reliability level and/or threshold". "Real-world" position, on the other hand, may refer to "actual" and/or "true" position, whereas "encompasses" a real-world position may refer to "comprises and/or contains" a real-world position.

Optionally, the vehicle road model 1 may - e.g. by means of an optional **concatenated confidence area determining unit 105** (shown in Fig. 6) - be adapted and/or configured for determining along at least a portion of a **fictitious line 60** connecting consecutive elements of said the or more static elements 6, a **concatenated confidence**

**area 70** extending between a **first confidence area 71** of a **first static element 61** and **at least a second confidence area 72** of an **at least second static element 62,** based on connecting respective **contour points 710** of the first confidence area 71 perpendicular to the fictitious line 60 at the first static element 61 with corresponding **contour points 720** of the at least second confidence area 72 perpendicular to the fictitious line 60 at the at least second element 62. Thereby, the road model 5 may comprise one or more continuous confidence areas 70 - e.g. essentially cone-shaped - around consecutive static elements 6, which continuous confidence area(s) 70 encompass said consecutive static elements of the real-world road-model with a predeterminable confidence level. Accordingly, this in turn may provide for great/greater confidence in subsequent potential vehicle path-planning, such in that narrower safety margins to the one or more static elements 6 may be utilized e.g. with maintained safety, and/or such as affecting a setting of vehicle speed e.g. in that a relatively faster speed may be set e.g. with maintained safety, and/or great/greater confidence in subsequent estimation of for instance a drivable area in front of the vehicle 2 and/or a drivable width of a driving lane 51, etc.

The concatenated confidence area(s) 70 may extend between any arbitrary number of consecutive confidence areas 71, 72 feasible for the implementation at hand, ranging e.g. from merely a couple up to hundreds or even thousands of consecutive confidence areas 71, 72. The phrase "consecutive elements" may refer to "essentially consecutive elements", whereas "concatenated confidence area" may refer to "extended confidence area". "Connecting respective contour points", on the other hand, may refer to "connecting respective vertices" and/or "concatenating respective contour points", whereas "perpendicular to said fictitious line" may refer to "essentially perpendicular to said fictitious line". "Fictitious line" may further refer to "assumed and/or imaginary line". According to an example, the phrase "based on connecting respective contour points of said first confidence area perpendicular to said fictitious line at said first static element with corresponding contour points of said at least second confidence area perpendicular to said fictitious line at said at least second element" may refer to "based on connecting upper contour points of said first confidence area perpendicular to said fictitious line at said first static element with upper contour points of said at least second confidence area perpendicular to said fictitious line at said at least second element, and connecting lower contour points of said first confidence area perpendicular to said fictitious line at said first static element with lower contour points of said at least second confidence area perpendicular to said fictitious line at said at least second element".

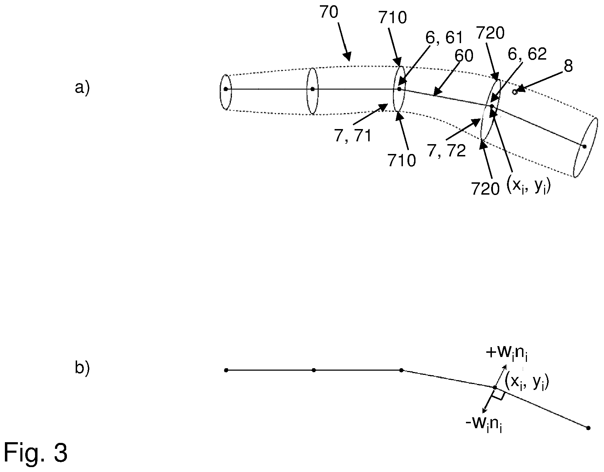

According to an example, and as exemplified in in **Figs. 3a-b,** which illustrate schematic views of an exemplifying concatenated confidence area 70 according to embodiments of the disclosure, determination of a concatenated confidence area 70 may be carried out as follows. Coordinates for estimated respective static elements 6 - here referred to as estimated break-points - may be denoted $(x_i, y_i)$, and the real-world i:th static element(s) 6 - here referred to as the true break-point(s) - denoted $(x_{i0}, y_{i0})$. It may furthermore be assumed that a covariance matrix for the i:th break-point is $Q_i$. Assuming that $(x_i, y_i)$ Gaussian with covariance matrix $Q_i$, the following quantity may have a so-called chi-square distribution with two degrees of freedom:

$$\begin{bmatrix} x_{i0} - x_i \\ y_{i0} - y_i \end{bmatrix}^T Q_i^{-1} \begin{bmatrix} x_{i0} - x_i \\ y_{i0} - y_i \end{bmatrix}$$

Respective confidence area 7, 71, 72 may thus be constructed from the following area, here ellipse:

$$(x, y): \begin{bmatrix} x - x_i \\ y - y_i \end{bmatrix}^T Q_i^{-1} \begin{bmatrix} x - x_i \\ y - y_i \end{bmatrix} \leq C$$

That is, respective confidence area 7, 71, 72 may consist of all points $(x, y)$ fulfilling the inequality "expression $\leq C$". To determine the threshold C, a confidence level CONF_LVL - such as e.g. CONF_LVL = 95% - needs to be specified. Given the knowledge of the confidence level and the distribution - here chi-square with two degrees of freedom - commonly known mathematical statistics standard tools may allow computation of C, such that:

$$\text{Probability} \left( \begin{bmatrix} x_{i0} - x_i \\ y_{i0} - y_i \end{bmatrix}^T Q_i^{-1} \begin{bmatrix} x_{i0} - x_i \\ y_{i0} - y_i \end{bmatrix} \leq C \right) = \text{CONF\_LVL}.$$

The computation of C may symbolically be written as C=chi2inv(CONF_LVL, degrees_of_freedom = 2), where the implementation of chi2inv() may be deemed straightforward for one skilled in the art.

To be able to e.g. capture a point - such as exemplifying **point 8** in **Fig. 3a** - falling outside respective confidence area 7, 71, 72, normal vectors $n_i$ may be defined - e.g. with unit-length - which may be constructed such that they are orthogonal to the fictive line 60 at break-point i. The relevant statistics to consider when constructing a concatenated confidence area 70 may then be the quantity:

$$n_i^T \begin{bmatrix} x_{i0} - x_i \\ y_{i0} - y_i \end{bmatrix}^T Q_i^{-1} \begin{bmatrix} x_{i0} - x_i \\ y_{i0} - y_i \end{bmatrix} n_i \qquad \text{(Equation 1)}$$

As exemplified in **Fig. 3b,** the concatenated confidence area may thus be constructed by connecting the contour points 720 - here denoted $+w_i/-w_i$ - of respective confidence area 7, which may be defined from the operation:

$$\begin{bmatrix} x_i \\ y_i \end{bmatrix}^T \pm w_i n_i$$

where the computation of $w_i$ may be based on the insight that Equation 1 is chi-square with one degree of freedom, hence:

$$w_i = \sqrt{\text{chi2inv}(\text{CONF\_LVL}, 1) \cdot n_i^T Q_i n_i}$$

According to an example and with reference to **Figs. 4a-c** - which illustrate schematic views of exemplifying confidence areas 7 according to embodiments of the disclosure - determining a respective confidence area 7 may be carried out as follows. Assume that a three dimensional estimation of a vehicle pose 20 is denoted p=[longitudinal, lateral, heading] = [X, Y, $\varphi$]. Here, X="longitudinal" and Y="lateral" may represent the coordinates in an arbitrary Cartesian frame of reference, whereas $\varphi$="heading" may represent the angle between the ego-vehicle 2 orientation and the longitudinal axis of the Cartesian coordinate frame of reference. It may be noted that the described approach below may be extended to a case of a full six degrees of freedom representation of the pose of a rigid body, such as vehicle 2. For simplicity, however, only the three-dimensional case is analyzed below.

For purpose of analysis, p0 may denote the actual pose of the vehicle 2. Assume furthermore that the estimated pose is Gaussian with covariance matrix C, which may be denoted as:

$$p \in \mathcal{N}(p0, C)$$

The expression above indicates that the estimated pose p is Gaussian, and the expected value - i.e. the mean - is p0 and the covariance matrix is C.

It may be noted that in practice, one cannot always guarantee that the actual distribution of the estimated pose is Gaussian. To deal with this, it may be assumed that the computation of the covariance matrix C takes this into account such that useful confidence intervals for the estimated pose still can be constructed using an assumption on Gaussianity. In practice this can be achieved with a conservative scaling of the covariance matrix:

$$C := \lambda^* C, \lambda \geq 1$$

It may next be assumed that data of the digital map 3 - e.g. HD map - is available in the shape of polylines consisting of ordered sequences of so-called break-points. These polylines could for example represent the two or three dimensional geometry of a static element 6 such as a lane-marking. For simplicity, it is here assumed that there is only a single such line in the digital map 3, and this polyline segment is denoted as:

$$l = \{ (x0, y0), (x1, y1), ..., (xN, yN) \}$$

The coordinate pairs (xi, yi) may then represent the location of a point belonging to a mapped static element 6 such as a lane-marking geometry. The nominal - i.e. the estimated - road model 5 may be obtained by a translation and rotation of the polyline L into the ego-vehicle coordinate frame 4. Thus, for each coordinate pair (xi, yi) in the digital map 3, the following computation may be performed:

$$\begin{bmatrix} X_i \\ Y_i \end{bmatrix} = \begin{bmatrix} \cos\phi & -\sin\phi \\ \sin\phi & \cos\phi \end{bmatrix} \left[ \begin{bmatrix} x_i \\ y_i \end{bmatrix} - \begin{bmatrix} X \\ Y \end{bmatrix} \right]$$

The nominal road model 5 in ego-vehicle coordinates may then be obtained from:

$$L=\{ (X0, Y0), (X1, Y1), ..., (XN, YN) \}$$

The task at hand is now to compute the covariance matrices Qi for each element 6 of the road model L. One possible approach to achieve this may be to perform an analytical linearization - for instance using a first order Taylor series expansion - of the mapping from (xi, yi) to (Xi, Yi). One potential issue with this approach is, however, that it does not take into account the fact that points along a polyline can move without changing the shape of a potential road curve, as illustrated in an exemplifying manner in Fig. 4a. In Fig. 4a, the depicted ellipses illustrate in an exemplifying manner confidence areas 7 with exemplifying 95% confidence level of each static element 6 - which may be denoted break-point (Xi, Yi) - computed by applying the above mentioned Taylor series approach. In the illustrated example, a longitudinal standard deviation of the estimated pose may be assumed to be e.g. 3 meters and a curve radius of a (simulated) road e.g. 300 meters. The potential issue in this case may thus be that a longitudinal component of the uncertainty of the polyline break-points may leak into the road. To overcome such an issue, there is suggested a linearization approach - i.e. applying a so-called cubature point method and/or function - which has its origin in the approximation of Gaussian weighted integrals.

To explain such a cubature point approach to compute road model uncertainties, assume that the random vector p - i.e. the estimated pose - is zero mean with a covariance matrix C. The problem at hand is to compute the covariance matrix of g = f(p) denoted G, where f() may represent an arbitrary non-linear function; here, f() corresponds to the above translation and rotation of map break-points into ego-vehicle coordinates. A set of so-called cubature points - here in in pseudo-code - may then be defined:

$$\text{sqrt\_cov} \qquad = \text{sqrt(C)};$$

$$z \qquad = \text{sqrt(3)*[sqrt\_cov -sqrt\_cov] + p};$$

Here sqrt(C) is the square root matrix of C, and the number "3" corresponds to the number of dimensions in p. The cubature points z are next put through the function f(), one column - i.e. vector - at a time, to enable computation of the covariance matrix of g:

```
G=0;
for i = 1:2*3:
  g = f(z(:, i)) - f(0);
  G = G + g*g^T/(2*3);
end
```

In the current context, the cubature points correspond to perturbations of the ego vehicle pose 20. Hence, f(0) corresponds to the nominal break-points of the polyline segment in ego vehicle frame 4. At this stage, the cubature point approach could potentially be applied on the polyline segment of interest as outlined above. However, similar results would then potentially be achieved as for the linearization approach illustrated in exemplifying Fig. 4a. To fully benefit from the cubature point approach - such as subsequently e.g. avoiding closing down drivable area while driving in curves - two further steps may be performed.

The first step involves contemplation about the following scenario. Suppose that the vehicle 2 is driving on an essentially completely straight - and relatively long - road and that all uncertainties except the longitudinal one are negligible. In such a case, all perturbed variants of the road geometry f(z(:, i)) may look identical - although the polyline break-points are translated back and forth. It may then be reasonable to assume that there is essentially no longitudinal uncertainty at all on the longitudinal polyline breakpoints, or in other words, that the break-points themselves are not visible to the vehicle 2, only the shape of the curve resulting when connecting the break-points are visible.

Accordingly, it may further be assumed that the nonlinearity f() not only is a translation/rotation of the map-elements 6, but also involves a projection step enabling measuring the effect from the perturbation by z(:,i) in the sense that it may be computed what perturbed road break-points may look like compared to the nominal road model, as illustrated in an exemplifying manner in Fig 4b.

The perturbed polyline breakpoints may - rather than being compared to the original breakpoints e.g. as in f(z(:, i) - f(0) - be compared to the points found by orthogonally projecting f(z(:, i)) back onto the original polyline, which - here in pseudo-code - may read as:

```
G=0;
for i = 1:2*N:
        perturbedPoints = f(z(:, i));
        compPoints = orthogonalProj(f(z(:, i)), f(0));
        g = perturbedPoints - compPoints;
        G = G + g*g^T/(2*N);
end
```

The above operation provides - as illustrated in exemplifying Fig. 4c - the possibility to maintain a drivable area in curves, which is a significant improvement compared to e.g. a classical linearization algorithm. Thus, there is a clear improvement in that undesirable confidence area leakage into the drivable part of the road thereby may be avoided.

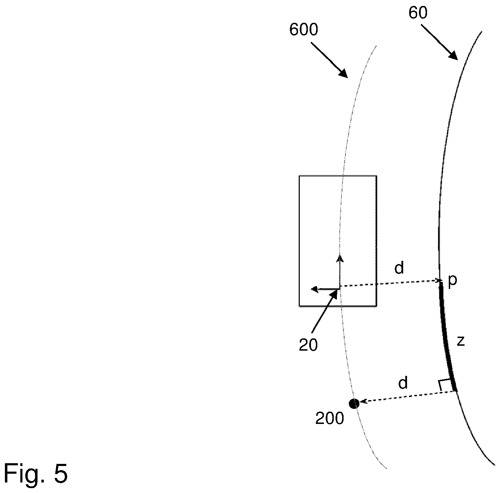

The second step that may be performed is described in conjunction with Fig. 5 below.

As further exemplified in **Fig. 5,** which illustrates a schematic view of exemplifying displacement of the vehicle pose 20 according to embodiments of the disclosure, the vehicle road model system 1 may optionally be adapted and/or configured such that - e.g. with support from the confidence areas determining unit 104 - determining a respective confidence area 7 may comprise that respective confidence area 7 further is based on one or more **displacements 200** of said vehicle pose 20. Thereby, respective confidence area 7 of the one or more static elements 6 may be established and/or calculated in a manner suitable for not only essentially straight - but additionally curved, curvy and/or non-straight - driving lanes 51. That is, potential confidence area leakage - depicted in an exemplifying manner in Fig. 4a - which may occur in a curve of a driving lane 51, may be avoided, and instead may confidence areas 7 with comparably significantly reduced areas 7 - as depicted in an exemplifying manner in Fig. 4c - result therefrom, subsequently e.g. enabling for the vehicle 2 to be allowed to continue driving in said driving lane 51 curve. According to an example, the phrase "said respective confidence area further being based on one or more displacements of said vehicle pose" may refer to "applying a function having as input one or more displacements of said vehicle pose". The phrase "function" may then refer to "non-linear function" and/or "algorithm", and according to an example further to "cubature points function". According to an example, the phrase "function having as input one or more displacements" may then refer to "function having cubature points represented by one or more displacements", whereas "displacements" may refer to "perturbations" and/ or "displacements e.g. represented by standard deviations".

Determining respective confidence area 7 may in this case for instance be based on applying a function - such as e.g. an exemplifying cubature points function - taking into consideration and/or using as input one or more displacements of the vehicle pose 20. Respective displacement 200 may be represented by any vehicle pose displacement 200 of arbitrary distance and/or direction and of any arbitrary magnitude deemed feasible for the implementation at hand. According to an example, however, respective vehicle pose displacement 200 may be represented by a standard deviation or essentially a standard deviation. Furthermore, optionally, the one or more displacements 200 may be situated along a **fictitious displacement line 600** parallel - or essentially parallel - to a fictitious line 60 connecting consecutive elements of the one or more static elements 6. Thereby, the displacements 200 may be positioned along an along-the-road direction rather than in ego-vehicle frame. According to an example, and as exemplified in Fig. 5, one approach to find and/or determine one or more desirable displacements 200 may be to project ego-vehicle coordinates onto the **nearest point p** on the fictitious line 60, where the nearest **projection distance** may be denoted **d**, then translate the projected point p a **displacement distance z** - e.g. a standard deviation - along the fictitious line 60 to a fictitious **point pz,** and then from point pz move - perpendicular and/or orthogonally to the fictitious line 60 - the projection distance d, to then arrive at and/or produce the desirable displacement 200.

As further shown in **Fig. 6,** which is a schematic block diagram illustrating an exemplifying vehicle road model system 1 according to embodiments of the disclosure, the vehicle road model system 1 comprises a pose determining unit 101, a transforming unit 102, a road model determining unit 103, a confidence areas determining unit 104 and an optional concatenated confidence area determining unit 105, all of which already have been described in greater detail above. Furthermore, the embodiments herein for providing a confidence-determined road model 5 for a vehicle 2, may be implemented through one or more processors, such as a **processor 106,** here denoted CPU, together with computer program code for performing the functions and actions of the embodiments herein. Said program code may also be provided as a computer program product, for instance in the form of a data carrier carrying computer program code for performing the embodiments herein when being loaded into the vehicle road model system 1. One such carrier may be in the form of a CD ROM disc and/or a hard drive, it is however feasible with other data carriers. The computer program code may furthermore be provided as pure program code on a server and downloaded to the vehicle road model system 1. The vehicle road model system 1 may further comprise a **memory 107** comprising one or more memory units. The memory 107 may be arranged to be used to store e.g. information, and further to store data, configurations, scheduling, and applications, to perform the methods herein when being executed in the vehicle road model system 1. For instance, the computer program code may be implemented in the firmware, stored in FLASH memory 107, of an embedded processor 106, and/or downloaded wirelessly e.g. from an off-board server.

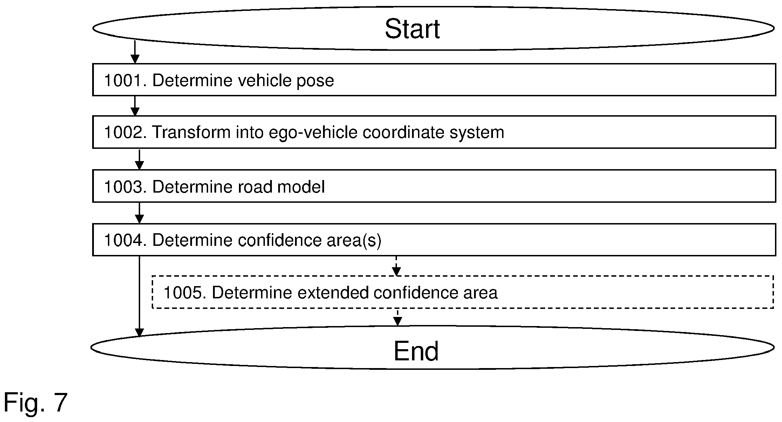

Furthermore, the pose determining unit 101, the transforming unit 102, the road model determining unit 103, the confidence areas determining unit 104, the optional concatenated confidence area determining unit 105, the optional processor 106 and/or the optional memory 107, may at least partly be comprised in one or more **nodes 108** e.g. ECUs of the vehicle 2. Those skilled in the art will also appreciate that said units 101, 102, 103, 104, 105 described above may refer to a combination of analog and digital circuits, and/or one or more processors configured with software and/or firmware, e.g. stored in a memory such as the memory 107, that when executed by the one or more processors such as the processor 106 perform as described herein, such as in conjunction with Fig. 7. One or more of these processors, as well as the other digital hardware, may be included in a single Application-Specific Integrated Circuitry, ASIC, or several processors and various digital hardware may be distributed among several separate components, whether individually packaged or assembled into a System-on-a-Chip, SoC.

Further shown in Fig. 6 is the ADAS or ADS 21, the optional positioning system 22, the optional one or more surrounding detecting sensors 23 and the digital map 3, all of which have been discussed in greater detail above.

**Fig. 7** is a flowchart depicting an exemplifying method performed by a vehicle road model system 1 according to embodiments of the disclosure. Said method is for providing a confidence-determined road model 5 for a vehicle 2. The exemplifying method, which may be continuously repeated, comprises one or more of the following actions discussed with support from Figs. 1-6. Moreover, the actions may be taken in any suitable order and/or one or more actions may be performed simultaneously and/or in alternate order where applicable. For instance, Action 1002 and Action 1003 may be performed simultaneously.

**Action 1001**

In Action 1001, the vehicle road model system 1 determines - e.g. with support from the pose determining unit 101 - based on derived localization data, a pose 20 of the vehicle 2 in view of a digital map 3, wherein the vehicle pose 20 is associated with an uncertainty pertinent the localization data and/or the digital map 3.

Optionally, the uncertainty may be estimated based on a Guassian assumption and its covariance matrix.

**Action 1002**

In Action 1002, the vehicle road model system 1 transforms - e.g. with support from the transforming unit 102 - based on the vehicle pose 20, at least a portion of the digital map 3 into an ego-vehicle coordinate system 4.

**Action 1003**

In Action 1003, the vehicle road model system 1 determines - e.g. with support from the road model determining unit 103 - based on the vehicle pose 20 and the digital map 3, a road model 5 in the ego-vehicle coordinate system 4, which road model 5 comprises one or more static elements 6 positioned in vicinity and ahead of the vehicle pose 20.

Optionally, the one or more static elements 6 may comprise consecutive static elements 61, 62, e.g. lane markings, delimiting one or more driving lanes 51

**Action 1004**

In Action 1004, the vehicle road model system 1 determines - e.g. with support from the confidence area determining unit 104 - based on the uncertainty and the one or more static elements 6, a respective confidence area 7 surrounding the one or more static elements 6, wherein respective confidence area 7 represents a region which with a predeterminable confidence level encompasses a real-world position of respective one or more static element 6.

Optionally, Action 1004 of determining a respective confidence area 7 may comprise determining respective confidence area 7 further based on one or more displacements 200 of the vehicle pose 20.

Further optionally, the one or more displacements 200 may then be situated along a fictitious displacement line 600 parallel to a fictitious line 60 connecting consecutive elements of the one or more static elements 6.

**Action 1005**

In optional Action 1005, the vehicle road model system 1 may determine - e.g. with support from the optional concatenated confidence area determining unit 105 - along at least a portion of a fictitious line 60 connecting consecutive elements of the one or more static elements 6, a concatenated confidence area 70 extending between a first confidence area 71 of a first static element 61 and at least a second confidence area 72 of an at least second static element 62, based on connecting respective contour points 710 of the first confidence area perpendicular to the fictitious line 60 at the first static element 61 with corresponding contour points 720 of the at least second confidence area 72 perpendicular to the fictitious line 60 at the at least second element 62.

The person skilled in the art realizes that the present disclosure by no means is limited to the preferred embodiments described above. On the contrary, many modifications and variations are possible within the scope of the appended claims. It should furthermore be noted that the drawings not necessarily are to scale and the dimensions of certain features may have been exaggerated for the sake of clarity. Emphasis is instead placed upon illustrating the principle of the embodiments herein. Additionally, in the claims, the word "comprising" does not exclude other elements or steps, and the indefinite article "a" or "an" does not exclude a plurality.

**Claims**

1. A method performed by a vehicle road model system (1) for providing a confidence-determined road model (5) for a vehicle (2), said method comprising:

   *determining* (1001) based on derived localization data, a position and orientation, pose (20), of said vehicle (2) in view of a digital map (3), wherein said vehicle pose (20) is associated with an uncertainty pertinent said localization data and/or said digital map (3);
   *transforming* (1002) based on said vehicle pose (20), at least a portion of said digital map (3) into an ego-vehicle coordinate system (4);
   *determining* (1003) based on said vehicle pose (20) and said digital map (3), a road model (5) in said ego-vehicle coordinate system (4), said road model (5) comprising one or more static elements (6) positioned in vicinity and ahead of said vehicle pose (20); and
   *determining* (1004) based on said uncertainty and said one or more static elements (6), a respective confidence area (7) surrounding said one or more static elements (6), wherein said respective confidence area (7) represents a region which with a predeterminable confidence level encompasses a real-world position of respective one or more static elements (6).

2. The method according to claim 1, further comprising:
   *determining* (1005) along at least a portion of a fictitious line (60) connecting consecutive elements of said one or more static elements (6), a concatenated confidence area (70) extending between a first confidence area (71) of a first static element (61) and at least a second confidence area (72) of an at least second static element (62), based on connecting respective contour points (710) of said first confidence area (71) perpendicular to said fictitious line (60) at said first static element (61) with corresponding contour points (720) of said at least second confidence area (72) perpendicular to said fictitious line (60) at said at least second element (62).

3. The method according to claim 1 or 2, wherein said one or more static elements (6) comprises consecutive static elements, e.g. lane markings, delimiting one or more driving lanes (51).

4. The method according to any one of claims 1-3, wherein said uncertainty is estimated based on a Guassian assumption and its covariance matrix.

5. The method according to any one of claims 1-4, wherein said *determining* (1004) a respective confidence area (7) comprises said respective confidence area (7) further being based on one or more displacements (200) of said vehicle pose (20).

6. The method according to claim 5, wherein said one or more displacements (200) are situated along a fictitious displacement line (600) parallel to a fictitious line (60) connecting consecutive elements of said one or more static elements (6).

7. A vehicle road model system (1) for providing a confidence-determined road model (5) for a vehicle (2), said vehicle road model (1) comprising:

a **pose determining unit** (101) for *determining* (1001) based on derived localization data, a position and orientation, pose (20), of said vehicle (2) in view of a digital map (3), wherein said vehicle pose (20) is associated with an uncertainty pertinent said localization data and/or said digital map (3);

a **transforming unit** (102) for *transforming* (1002) based on said vehicle pose (20), at least a portion of said digital map (3) into an ego-vehicle coordinate system (4);

a **road model determining unit** (103) for *determining* (1003) based on said vehicle pose (20) and said digital map (3), a road model (5) in said ego-vehicle coordinate system (4), said road model (5) comprising one or more static elements (6) positioned in vicinity and ahead of said vehicle pose (20); and

a **confidence area determining unit** (104) for *determining* (1004) based on said uncertainty and said one or more static elements (6), a respective confidence area (7) surrounding said one or more static elements (6), wherein said respective confidence area (7) represents a region which with a predeterminable confidence level encompasses a real-world position of respective one or more static elements (6).

8. The vehicle road model system (1) according to claim 7, further comprising:
a **concatenated confidence area determining unit** (105) for *determining* (1005) along at least a portion of a fictitious line (60) connecting consecutive elements of said one or more static elements (6), a concatenated confidence area (70) extending between a first confidence area (71) of a first static element (61) and at least a second confidence area (72) of an at least second static element (62), based on connecting respective contour points (710) of said first confidence area (71) perpendicular to said fictitious line (60) at said first static element (61) with corresponding contour points (720) of said at least second confidence area (72) perpendicular to said fictitious line (60) at said at least second element (62).

9. The vehicle road model system (1) according to claim 7 and 8, wherein said one or more static elements (6) comprises consecutive static elements, e.g. lane markings, delimiting one or more driving lanes (51).

10. The vehicle road model system (1) according to any one of claims 7-9, wherein said uncertainty is estimated based on a Guassian assumption and its covariance matrix.

11. The vehicle road model system (1) according to any one of claims 7-10, wherein said confidence area determining unit (104) is adapted to determine respective confidence area (7) further based on one or more displacements (200) of said vehicle pose (20).

12. The vehicle road model system (1) according to claim 11, wherein said one or more displacements (200) are situated along a fictitious displacement line (600) parallel to a fictitious line (60) connecting consecutive elements of said one or more static elements (6).

13. A vehicle (2) comprising an advanced driver-assistance system, ADAS, or automated driving system, ADS, (21) and further comprising a vehicle road model system (1) according to any one of claims 7-12.

14. A computer program product comprising a computer program containing computer program code means arranged to cause a computer or a processor to execute the steps of a method according to any of claims 1-6, stored on a computer-readable medium or a carrier wave.

15. A non-volatile computer readable storage medium having stored thereon the computer program product of claim 14.

Fig. 1

Fig. 2

EP 3 862 916 A1

a)

70  710  6, 61  720  6, 62  8
60
7, 71  710  7, 72  720 $(x_i, y_i)$

b)

$+w_i n_i$
$(x_i, y_i)$
$-w_i n_i$

Fig. 3

Fig. 4

Fig. 5

1  Vehicle road model system

101 Pose determining unit

102 Transforming unit

103 Road model determining unit

106 CPU

104 Confidence areas determining unit

105 Concat. conf. area determining unit

107 Memory

108 Node

22 Positioning system

23 Surr. detecting sensor(s)

3 Digital map

21 ADAS or ADS

Fig. 6

EP 3 862 916 A1

```
                          ┌─────────────────────────────────────────────────┐
                          │                      Start                       │
                          └─────────────────────────────────────────────────┘
                                                 │
                                                 ▼
                          ┌─────────────────────────────────────────────────┐
                          │ 1001. Determine vehicle pose                     │
                          └─────────────────────────────────────────────────┘
                                                 │
                                                 ▼
                          ┌─────────────────────────────────────────────────┐
                          │ 1002. Transform into ego-vehicle coordinate system │
                          └─────────────────────────────────────────────────┘
                                                 │
                                                 ▼
                          ┌─────────────────────────────────────────────────┐
                          │ 1003. Determine road model                       │
                          └─────────────────────────────────────────────────┘
                                                 │
                                                 ▼
                          ┌─────────────────────────────────────────────────┐
                          │ 1004. Determine confidence area(s)               │
                          └─────────────────────────────────────────────────┘
                              │                            │
                              │                            ▼
                              │        ┌ ─ ─ ─ ─ ─ ─ ─ ─ ─ ─ ─ ─ ─ ─ ─ ─ ─ ─ ┐
                              │          1005. Determine extended confidence area
                              │        └ ─ ─ ─ ─ ─ ─ ─ ─ ─ ─ ─ ─ ─ ─ ─ ─ ─ ─ ┘
                              │                            │
                              ▼                            ▼
                          ┌─────────────────────────────────────────────────┐
                          │                      End                         │
                          └─────────────────────────────────────────────────┘
```

Fig. 7

Europäisches
Patentamt

European
Patent Office

Office européen
des brevets

# EUROPEAN SEARCH REPORT

Application Number

EP 20 15 5564

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SVENSSON DANIEL ET AL: "Ego lane estimation using vehicle observations and map information", 2016 IEEE INTELLIGENT VEHICLES SYMPOSIUM (IV), IEEE, 19 June 2016 (2016-06-19), pages 909-914, XP032939074, DOI: 10.1109/IVS.2016.7535496 [retrieved on 2016-08-05] * sections I-VII * * abstract; figures 1-4 * | 1-15 | INV. G06K9/00 |
| X | GWON GI-POONG ET AL: "Generation of a Precise and Efficient Lane-Level Road Map for Intelligent Vehicle Systems", IEEE TRANSACTIONS ON VEHICULAR TECHNOLOGY, IEEE SERVICE CENTER, PISCATAWAY, NJ, US, vol. 66, no. 6, 1 June 2017 (2017-06-01), pages 4517-4533, XP011653945, ISSN: 0018-9545, DOI: 10.1109/TVT.2016.2535210 [retrieved on 2017-06-16] * sections I-VII * * abstract; figures 1-15 * | 1-15 | |

TECHNICAL FIELDS
SEARCHED (IPC)

G06K

The present search report has been drawn up for all claims

| Place of search | Date of completion of the search | Examiner |
|---|---|---|
| The Hague | 15 July 2020 | Nilsson, Martin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 ...................................................................

& : member of the same patent family, corresponding
    document

EPO FORM 1503 03.82 (P04C01)